# EUROPÄISCHE PATENTANMELDUNG

(11) **EP 4 516 436 A1**
(43) Veröffentlichungstag der Anmeldung: **05.03.2025**
(21) Anmeldenummer: 23195242.5
(22) Anmeldetag: 04.09.2023
(51) Int. Cl.: B23B 31/40

(54) **INNENSPANNMITTEL**

(71) Anmelder: Hainbuch GmbH Spannende Technik, 71672 Marbach (DE)
(72) Erfinder: HILLINGER, Alfred, 71711 Murr (DE)
(74) Vertreter: Witte, Weller und Partner Patentanwälte mbB Stuttgart

(57) **Zusammenfassung**

Vorgeschlagen wird ein Spannmittel (12, 12') in Art eines Innenspannmittels zum Festlegen von Werkstücken. Das Spannmittel (12, 12') verfügt überein in Axialrichtung (2) erstrecktes Gehäuse (20), das einen in Axialrichtung erstreckten Spannkegel (22) aufweist. Das Spannmittel (12, 12') verfügt weiterhin über eine Segmentspannbüchse (50) mit einer Mehrzahl von Spannsegmenten (60), die in Radialrichtung (4) gegeneinander beweglich sind und die an ihrer Außenseite eine Spannfläche (62) zur Anlage am Werkstück aufweisen. Die Spannsegmente (60) weisen an ihrer Innenseite schräggestellte Gleitflächen (64) zur Anlage an der Außenfläche des Spannkegels auf, so dass die Spannsegmente (60) durch gemeinsame axiale Verlagerung gegenüber dem Spannkegel (22) gegeneinander radial verlagerbar sind.

Die Außenfläche (24) des Spannkegels (22) weist eine im Querschnitt unrunde Form auf und die Gleitflächen (64) der Spannsegmente (60) sind korrespondierend zu dieser unrunden Form geformt, wobei das Spannmittel (12) weiterhin über ein gegenüber dem Gehäuse (20) bewegliches Kopplungselement (40) oder überein abnehmbares und von außen aufsetzbares Kopplungselement (40') verfügt, mittels dessen ein proximales Endes der Segmentspannbüchse (50) am Spannkegel (22) gehalten ist.

## Beschreibung

### ANWENDUNGSGEBIET UND STAND DER TECHNIK

Die Erfindung betrifft ein Spannmittel in Art eines Innenspannmittels zum Festlegen von Werkstücken, insbesondere zum Zwecke der Rotationsbearbeitung dieser Werkstücke.

Mittels eines gattungsgemäßen Innenspannmittels werden insbesondere Werkstücke gespannt, die eine zentrale Ausnehmung aufweisen, so dass diese Werkstücke an ihrem inneren Umfang durch die Spannflächen von nach außen wirkenden Spannsegmenten eingespannt werden können.

Ein gattungsgemäßes Spannmittel verfügt über ein in einer Axialrichtung erstrecktes Gehäuse mit einem in Axialrichtung erstreckten Spannkegel. Üblicherweise weisen solche Spannkegel einen kreisrunden Querschnitt auf. Auf den Spannkegel wird bestimmungsgemäß eine Segmentspannbüchse aufgeschoben, deren Außenseite eine Spannfläche bildet zur Anlage am inneren Umfangdes Werkstücks. Die Segmentspannbüchse eines gattungsgemäßen wie auch eines erfindungsgemäßen Spannmittels weist eine Anzahl von Spannsegmenten auf, die miteinander beweglich verbunden sind, insbesondere durch elastisch verformbare Verbindungsabschnitte zwischen den Spannsegmenten.

Das Werkstück wird auf die Außenseite der Segmentspannbüchse aufgeschoben. Anschließend wird die Segmentspannbüchse als Ganzes axial gegenüber dem Spannkegel verlagert, um durch die Kegelform des Spannkegels aufgeweitet zu werden und so die Spannfläche der Segmentspannbüchse gegen den inneren Umfang des Werkstücks zu pressen. Dieses wird hierdurch festgespannt.

Ein gattungsgemäßes Spannmittel wird üblicherweise an einer Rotationsspindel angebracht und weist ein spindelseitiges Gehäuse auf, dessen distales Ende durch den Spannkegel gebildet wird.

### AUFGABE UND LÖSUNG

Aufgabe der Erfindung ist es, ein verbessertes Spannmittel der eingangs beschriebenen Art zur Verfügung zu stellen.

Erfindungsgemäß wird zur Lösung dieser Aufgabe ein Spannmittel vorgeschlagen, welches in Übereinstimmung mit gattungsgemäßen Spannmitteln über ein in einer Axialrichtung erstrecktes Gehäuse mit einem die Axialrichtung definierenden und in Axialrichtung erstreckten Spannkegels der eingangs genannten Art verfügt. Der Spannkegel weist eine umlaufende Außenfläche auf, die sich zu einem distalen Ende hin verjüngt. Zur Zusammenwirkung hiermit verfügt das Spannmittel über eine Segmentspannbüchse mit einer Mehrzahl von Spannsegmenten, die in Radialrichtung gegeneinander beweglich sind, und die an ihrer Außenseite eine Spannfläche zur Anlage am Werkstück aufweisen.

Zum Zusammenwirken mit dem Spannkegel weisen die Spannsegmente an ihrer Innenseite schräggestellte Gleitflächen zur Anlage an der Außenfläche des Spannkegels auf, so dass die Spannsegmente durch gemeinsame axiale Verlagerung gegenüber dem Spannkegel gegeneinander radial verlagerbar sind.

Erfindungsgemäß wird vorgeschlagen, dass die Außenfläche des Spannkegels eine im Querschnitt unrunde Form aufweist und die Gleitflächen der Spannsegmente korrespondierend zu dieser unrunden Form geformt sind. Insbesondere vorzugsweise weist der Spannkegel eine polygonale Außenform auf. Bevorzugt ist eine sechseckige Formgebung. Die korrespondierende Formgebung der Spannsegmente bedeutet, dass diese innenseitig eine Form aufweisen, mit der sie flächig am Spannkegel anliegen können, wobei im Falle einer polygonalen und insbesondere sechseckigen Querschnittsform des Spann kegels die Spannsegmente jeweils innenseitig mit zwei zueinander angewinkelten Gleitflächen versehen sind. Bei einem Spannkegel, der einen sechseckigen Querschnitt aufweist, bedeutet dies im Falle von drei Spannsegmenten, dass deren Gleitflächen entsprechend um 120° gegeneinander angewinkelt sind.

Die unrunde Form stellt einen Vorteil in Hinblick auf die Momentenübertragung vom Spannkegel auf die Segmentspannbüchse dar. Ein Verdrehen der Segmentspannbüchse gegenüber dem Spannkegel kann nicht auftreten.

Die Außenfläche des Spannkegels sowie die Innenseiten der Spannsegmente können insbesondere durch zumindest abschnittsweise plane Flächenabschnitte gebildet sein, so dass die entsprechenden Flächenabschnitte ungeachtet der axialen Bewegung der Segmentspannbüchse gegenüber dem Spannkegel flächig aneinander anliegen.

Mit der unrunden Form des Spannkegels geht einher, dass die aus dem Stand der Technik bekannte Art, die Segmentspannbüchse über ein Bajonett am Gehäuse anzukoppeln, nicht mehr offensteht. Wenn die Segmentspannbüchse auf den Spannkegel aufgeschoben ist, so ist es nicht mehr möglich, sie gegenüber dem zum Gehäuse ortsfesten Spannkegel zu verdrehen.

Um dennoch die Segmentspannbüchse festlegen und insbesondere auch spannen zu können, ist ein gegenüber dem Gehäuse bewegliches Kopplungselement oder ein als Ganzes abnehmbares und aufsetzbares Kopplungselement vorgesehen, mittels dessen ein proximales Ende der Segmentspannbüchse am Spannkegel gehalten wird. Als proximales Ende des Spannkegels wird dessen in Richtung des Gehäuses bzw. der Spindel weisendes Ende angesehen. Das distale Ende des Spannkegels ist das gegenüberliegende freie Ende.

Das Spannmittel ist vorzugsweise zur Anbringung an einer Rotationsspindel ausgebildet und verfügt zur Anbringung an der Rotationsspindel über Schraubbohrungen im Gehäuse, durch die Befestigungsschrauben in einer Stirnseite der Rotationsspindel geschraubt werden können. Der Spannkegel ist als Teils eines in sich starren und vorzugsweise einstückigen Gehäuses vorgesehen, welches sowohl die Schraubbohrungen als auch den Spannkegel umfasst.

Das Kopplungselement erfüllt vorzugweise neben dem Zweck, die Segmentspannbüchse am Gehäuse gegen axiales Abziehen zu sichern, die Funktion, hierüber eine axiale und in proximale Richtung wirkende Kraft auf die Segmentspannbüchse auszuüben, die am proximalen Ende in die Segmentspannbüchse eingekoppelt wird und mittels derer die Segmentspannbüchse weiter auf den Spannkegel aufgezogen werden kann, um hierdurch die umfängliche Aufweitung der Segmentspannbüchse und damit die radiale Verlagerung der Spannsegmente nach außen und hierdurch die Herstellung eines gespannten Zustandes des Werkstücks zu bewirken. Durch die Anbringung des Kopplungselements am proximalen Ende der Segmentspannbüchse ist das Kopplungselement in der Lage, die Segmentspannbüchse mittels einer Zugspannung auf den Kegel aufzuziehen und hierbei aufzuweiten.

Bei der Erfindungsvariante mit einem als Ganzes abnehmbaren Kopplungselement ist vorgesehen, dass nach Aufschieben der Segmentspannbüchse auf den Spannkegel das Kopplungselement am proximalen Ende angesetzt wird.

Das Kopplungselement kann dabei insbesondere als mehrteiliges oder mehrgliedriges Kopplungselement ausgebildet sein, welches zum Zwecke des seitlichen Aufsetzens auf die Segmentspannbüchse vollständig zerlegt wird, beispielsweise in zwei vollständig trennbare Glieder, die miteinander verbindbar sein können.

Vorzugsweise ist das Kopplungselement als in sich verformbares Kopplungselement ausgebildet, welches mindestens zwei starre Teilelemente aufweist, die aneinander beweglich angebracht sind, insbesondere mittels mindestens eines elastisch verformbaren Verbindungselements, wobei die beiden Teilelemente gemeinsam einen an einer Stelle unterbrochenen Kopplungsring bilden. Ein solcher Kopplungsring kann mittels des als Gelenk wirkenden Verbindungselements verformt und insbesondere aufgeklappt werden, so dass der aufgeklappte Kopplungsring am proximalen Ende der Segmentspannbüchse von der Seite außenseitig aufgesetzt werden kann. Dort kann er dann durch Zusammenfügen in die die Segmentspannbüchse umfänglich umgebende Konfiguration gebracht werden.

Im angebrachten Zustand koppelt das abnehmbare Kopplungselement die Segmentspannbüchse einerseits mit einem axial beweglichen Steuerorgan, welches sich durch Öffnungen im Gehäuse des Spannmittels nach außen erstreckt. Das abnehmbare Kopplungselement weist im Querschnitt eine Formgebung auf, mittels derer die Segmentspannbüchse derart mit dem Steuerorgan verbindbar ist, dass ein Zugkraft übertragbar ist. Insbesondere kann das abnehmbare Kopplungselement eine C-Profilform aufweisen. Die über das Kopplungselement übertragene Zugkraft erlaubt es, die Segmentspannbüchse weiter auf den Spannkegel aufzuziehen und hierdurch den Umfang der Spannfläche zu vergrößern, so dass hierdurch das Werkstück festgespannt wird.

Vorzugsweise ist zusätzlich eine Schutzhülse vorgesehen, die im montierten Zustand das abnehmbare Kopplungselement umgibt und hierdurch verhindert, dass sich das Kopplungselement ungewollt vom Steuerorgan oder der Segmentspannbüchse trennt. Die Schutzhülse wird nach Anbringung des Kopplungselements axial aufgeschoben und vorzugsweise an einer Stirnseite des Gehäuses des Spannmittels befestigt.

Eine andere Erfindungsvariante wird als demgegenüber vorteilhaft angesehen: Bei dieser zweiten Erfindungsvariante ist vorgesehen, dass das Kopplungselement als in sich starres Kopplungselement ausgebildet ist. Das Kopplungselement weist in diesem Falle eine starre und in etwa ringförmige Struktur auf, die im Zuge der Montage des Kopplungselements vor Anbringung der Segmentspannbüchse vom distalen Ende aus auf den Spannkegel aufgeschoben werden kann und mittels derer die Segmentspannbüchse anschließend am Spannkegel gesichert ist. Unter einer ringförmigen Struktur bzw. einem Kopplungsring wird verstanden, dass der in sich starre Körper eine zentrale Durchbrechung aufweist, mittels derer er auf den Spannkegel aufgeschoben werden kann.

Insbesondere kann das Kopplungselement bzw. der Kopplungsring relativ zum Gehäuse des Spannmittels drehbeweglich gelagert sein. Das Kopplungselement ist also im montierten Zustand gegenüber dem Spannkegel drehbar. Die Drehbarkeit des Kopplungselements ist zur Herstellung einer Sicherung des Segmentspannbüchse vorgesehen. Durch die Drehbewegung wird das Kopplungselement gegenüber der Segmentspannbüchse um die Mittelachse des Spannkegels verdreht.

Dies kann zur axialen Sicherung der Segmentspannbüchse genutzt werden, wobei hierfür am Kopplungselementsowie an der Segmentspannbüchse korrespondierende Sicherungskonturen vorgesehen sind. Insbesondere kann vorgesehen sein, dass diese Sicherungskonturen in Art eines Bajonetts wirken. Die Sicherungskonturen sind hierfür mittels ihrer zusammenwirkenden Formgebungen derart aufeinander abgestimmt, dass in einer ersten Drehstellung, der Freigabestellung, die Sicherungskontur der Segmentspannbüchse in das Kopplungselement eingeschoben werden kann und dass in einer zweiten Drehstellung, der Sicherungsstellung, die Sicherungskonturen der Segmentspannbüchse und des Kopplungselements ein Abziehen der Segmentspannbüchse vom Spannkegel verhindern.

Es wird hierdurch möglich, zum Zwecke der Ankopplung der Segmentspannbüchse bei Anordnung des Kopplungselements in der Freigabestellung diese auf den Spannkegel aufzuschieben und dabei in die Durchbrechungdes Kopplungselements einzuschieben. Anschließend wird das Kopplungselement verdreht, beispielsweise um 15°, so dass hierdurch die Sicherungsstellung hergestellt ist, in der ein Abziehen der Segmentspannbüchse vom Spannkegel nicht mehr möglich ist.

Vorzugsweise sind die Freigabestellung und die Sicherungsstellung gegeneinander um maximal 20° beabstandet, vorzugsweise um maximal 15°. Dies ermöglicht es, mit einer vergleichsweise geringen rotativen Bewegung des Kopplungselements zwischen der Freigabestellung und der Sicherungsstellung zu wechseln. Dies ist insbesondere hilfreich, um die Anbindung des Spannkegels an das umgebende Gehäuse nicht zu sehr durch Öffnungen zu schwächen, die der Kraftübertragung zwischen einem Steuerorgan im Gehäuse und dem Kopplungselement dienen.

Die Sicherungskonturen an der Spannsegmentbuchse und am Kopplungselement sind vorzugsweise derart gestaltet, dass die Sicherungskontur der Segmentspannbüchse in Form eines nach au-ßen weisenden Kragens ausgebildet ist. Dieser Kragen wird vorzugsweise durch einstückig mit den Spannsegmenten oder zumindest einigen der Spannsegmente angeformte Kragenabschnitte gebildet. Korrespondierend hierzu ist die Sicherungskontur am Kopplungselement in Form eines nach innen weisenden Kragens ausgebildet. In der Sicherungsstellung kollidiert die Segmentspannbüchse aufgrund ihres Kragens mit dem Kragen des Kopplungselements, wenn sie in Richtung des distalen Endes des Spannkegels gezogen wird. Durch eine Bewegung des Kopplungselements in proximale Richtung wird über die Sicherungskonturen eine Kraft in die Segmentspannbüchse eingeleitet, die die Segmentspannbüchse bei gleichzeitiger Aufweitung weiter auf den Spannkegel zieht.

Die Kragen am Kopplungselement und an der Segmentspannbüchse sind üblicherweise keine umfänglich ununterbrochenen Kragen, sondern können durch eine Mehrzahl von einzelnen Kragensegmenten gebildet sein. Im Falle einer Segmentspannbüchse ist vorzugsweise mindestens an einem jeden Spannsegment ein Kragensegment vorgesehen. Der Kragen am Kopplungselement kann als umlaufender Kragen gebildet sein. Jedoch ist auch hier eine Gestaltung mit einer Mehrzahl von Kragensegmenten möglich.

Insbesondere vorzugsweise ist die Sicherungskontur am Kopplungselement und/oder an der Segmentspannbüchse umlaufend uneinheitlich, so dass in der Freigabestellung die Segmentspannbüchse nur in einer definierten Drehausrichtung durch das Kopplungselement geschoben werden kann. Unter der Voraussetzung, dass das Kopplungselement in seiner Sicherungsstellung bezogen auf die Drehstellung stets in gleicher Relativposition zum Gehäuse des Spannmittels verbleibt, ist somit gewährleistet, dass auch stets die gleichen Flächenabschnitte an der Innenseite der Segmentspannbüchse an den gleichen Flächenabschnitten des Spannkegels anliegen. Dies begünstigt die mit dem Spannmittel erzielbare Fertigungsgenauigkeit.

Insbesondere kann dies dadurch erzielt werden, dass die Sicherungskontur der Segmentspannbüchse an den Spannsegmenten vorgesehen ist, wobei mindestens ein Spannsegment eine Sicherungskontur aufweist, die von der Sicherungskontur mindestens eines anderen Spannsegments abweicht. Insbesondere vorzugsweise weist die Segmentspannbüchse mindestens drei Spannsegmente auf, von denen mindestens zwei Spannsegmente baugleich sind, während mindestens und vorzugsweise genau ein Spannsegment eine abweichende Formgebung im Bereich der Sicherungskontur aufweist.

Um mittels des Kopplungselements die Segmentspannbüchse auf den Spannkegel weiter aufziehen zu können und hierdurch ein Werkstück spannen zu können, ist das Kopplungselement dafür vorgesehen, unmittelbar oder mittelbar eine Verbindung mit einem im Gehäuse befindlichen und mindestens axial verfahrbaren Steuerorgan herzustellen.

Zu diesem Zweck ist vorzugsweise vorgesehen, dass das Gehäuse mindestens eine Durchbrechung aufweist, durch die hindurch das Kopplungselement selbst oder eine bezogen auf die Axialrichtung mit dem Kopplungselement verkoppelbares Kraftübertragungsglied in das Gehäuse hineinragt, um hier mit dem Steuerorgan verbunden zu sein, so dass eine Axialbewegung des Steuerorgans gegenüber dem Gehäuse zu einer Axialbewegung des Kopplungselements gegenüber dem Gehäuse führt. Vorzugsweise ist am Kopplungselement eines oder eine Mehrzahl von einstückig angeformten länglichen Kraftübertragungsgliedern vorgesehen, die durch die Durchbrechungen in das Gehäuse und bis zum Steuerorgan reichen.

Insbesondere kann dies dem Zweck dienen, das Kopplungselement mit dem Steuerorgan axial ortsfest zu verbinden, so dass über eine axiale Verlagerung des Steuerorgans die mittels des Kopplungselements angekoppelte Segmentspannbüchse axial gegenüber dem Spannkegel bewegbar ist und hierdurch ein Werkstück an der Segmentspannbüchse festgespannt und hiervon gelöst werden kann.

Alternativ oder zusätzlich kann vorgesehen sein, dass das Kopplungselement mit dem Steuerorgan bezogen auf die Mittelachse rotativ verbunden ist, so dass über eine Drehverlagerung des Steuerorgans auch das Kopplungselement gegenüber dem Spannkegel und der Segmentspannbüchse verdreht werden kann und somit in Abhängigkeit der Drehrichtung in die Sicherungsstellung und die Freigabestellung verbracht werden kann.

Zur Kopplung des Steuerorgans innerhalb des Gehäuses mit dem Kopplungselement an der Außenseite weist das Gehäuse vorzugsweise eine Mehrzahl von Durchbrechungen auf, durch die hindurch das Kopplungselement mit dem im Gehäuse des Spannmittels angeordneten Steuerorgan verbunden ist. Diese Mehrzahl von Durchbrechungen ist vorzugsweise gleichmäßig umlaufend verteilt. Insbesondere vorzugsweise ist die Zahl der Durchbrechungen ein ganzzahliges Vielfaches der Seitenzahl des polygonalen Spannkegels oder die Seitenzahl des polygonalen Spannkegels ist ein ganzzahliges Vielfaches der Zahl der Durchbrechungen. Insbesondere kann die Zahl der Durchbrechungen auch mit der Seitenzahl des Spannkegels übereinstimmen. Insbesondere beträgt die Zahl der Durchbrechungen mindestens drei und insbesondere vorzugsweise genau sechs.

Über die Mehrzahl von Durchbrechungen kann vom Steuerorgan eine Kraft bzw. ein Drehmoment gleichmäßig in das Kopplungselement ausgeübt werden. Stege zwischen den Durchbrechungen verbleiben, um den Spannkegel vorzugsweise einstückig mit einem die Durchbrechungen umgebenden Gehäuseabschnitt fest zu verbinden und hierdurch die Steifigkeit des Spannkegels zu gewährleisten.

Die Durchbrechungen sind vorzugweise als Langlöcher ausgebildet, insbesondere in Form von kreisabschnittsförmigen Langlöchern. Sie weisen also in Umfangsrichtung eine größere Erstreckung als in Radialrichtung auf. Die Gestaltung der Durchbrechungen als Langlöcher gestattet es bei passender Gestaltung von Verbindungssegmenten zwischen dem Kopplungselement und dem Steuerorgan, dass das Kopplungselement dauerhaft mit dem Steuerorgan gekoppelt bleibt, während es zum Zwecke des Ankoppelns an die Segmentspannbüchse zwischen der Freigabestellung und der Sicherungsstellung verdreht wird.

Wie bereits erläutert, ist eine Bauweise möglich, bei der die Verdrehung des Kopplungselements durch ein im Gehäuse befindliches Antriebselement wie insbesondere ein drehbares Steuerorgan bewirkt wird.

Eine besonders bevorzugte Gestaltung sieht allerdings vor, dass das Verdrehen des Kopplungselements um die Mittelachse an der Außenseite erfolgt. Hierfür ist vorzugsweise ein mit dem Kopplungselement bezogen auf ein Verdrehen um die Mittelachse formschlüssig verbundenes Außenelement vorgesehen, welches von außen zugänglich ist. Insbesondere kann das Außenelement als ein das insbesondere als Kopplungsring ausgestaltetes Kopplungselement umgebender Außenrings ausbildet sein. Zur Herstellung des rotativ wirkenden Formschlusses ist vorzugsweise ein Momentenstift oder eine Momentenausnehmung am Außenelement und eine Momentenausnehmung oder ein Momentenstift des Kopplungselements vorgesehen. Der Momentenstift an einem der Bauteile greift in die Momentenausnehmung am anderen Bauteil und bewirkt rotativen Formschluss. Vorzugsweise sind der Momentenstift und die Momentenausnehmung jedoch so aufeinander abgestimmt, dass eine axiale Relativbewegung zwischen dem Außenelement und dem Kopplungselement möglich bleibt. Wenn das Kopplungselementzum Zwecke des Spannens und Entspannens des Werkstücks in Axialrichtung gegenüber dem Gehäuse und dem Spannkegel verlagert wird, kann das Außenelement dennoch ortsfest verbleiben.

Das Außenelement kann dafür vorgesehen sein, mittels einer Drehbewegung die Freigabestellung und dieSicherungsstellungdes Kopplungselements zu bewirken. Insbesondere jedoch dientdasAu-ßenelement der rotativen Sicherung des Kopplungselements in seiner Sicherungsstellung. Insbesondere vorzugsweise ist das Außenelement zur Anbringung am Gehäuse ausgebildet, um hierdurch die Drehstellung des Kopplungselements in der Sicherungsstellung zu gewährleisten. Zum Zwecke der Festlegung des Außenelements am Gehäuse kann insbesondere vorgesehen sein, dass das Außenelement mindestens eine an das Gehäuse angepasste Bohrung aufweist, durch die hindurch das Außenelement am Gehäuse festgeschraubt werden kann.

Das erfindungsgemäße Spannmittel weist ein Gehäuse auf, dessen distales Ende durch den Spannkegel gebildet wird. Innerhalb dieses Gehäuses ist vorzugsweise ein Zugorgan vorgesehen, um die für das Spannen erforderliche Kraft über das Steuerorgan und das Dopplungselement in die Segmentspannbüchse einzuleiten.

Das Spannmittel verfügt vorzugsweise über eine Schutzblende, mittels derer das Eindringen von Schmutz und Spänen in den Bereich der Sicherungskontur unterbunden wird. Dies ist zweckmäßig, um zu verhindern, dass Schmutz oder insbesondere Späne zwischen die Anlagenflächen der Sicherungskontur gelangen und somit eine asymmetrische Kraftübertragung vom Kopplungselement auf die Segmentspannbüchse verursachen.

Vorzugsweise verfügt die Segmentspannbüchse über die Schutzblende, die im montierten Zustand der Segmentspannbüchse die Sicherungskonturen des Kopplungselements und/oder der Segmentspannbüchse schützt. Die Schutzblende ist vorzugsweise in Art einer ringförmigen Schutzblende gestaltet, die die Spannsegmente umgebend in Richtung des distalen Endes gegenüber der Sicherungskontur der Segmentspannbüchse versetzt angeordnet ist.

Vorzugsweise ist die Schutzblende aus einem gummiähnlichen, elastischen Material hergestellt. Insbesondere vorzugsweise ist vorgesehen, dass die die Schutzblende einstückig mit zwischen den Spannsegmenten vorgesehenen elastischen Verbindungselementen ausgestaltet ist. Eine derart ausgestaltete Segmentspannbüchse weist also einen zusammenhängenden elastischen Teilkörper auf, der gleichzeitig die Schutzblende und die Verbindungselemente zwischen den Spannsegmenten bildet.

Das Kopplungselement ist vorzugsweise mit einer stirnseitige und insbesondere planen Anlagefläche versehen, an der die Schutzblende der Segmentspannbüchse nach Anbringung der Segmentspannbüchse umlaufend anliegt.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind.
Fig. 1 und 2 zeigen ein erfindungsgemäßes Spannmittel in Gesamtdarstellung, wobei in Fig. 2 das Spannmittel geschnitten dargestellt ist.
Fig. 3 zeigt das Spannmittel in zerlegter Form.
Fig. 4 und 5 zeigen ein Kopplungselement und eine Segmentspannbüchse des Spannmittels in Einzeldarstellung.
Fig. 6 und 7 zeigen ein erfindungsgemäßes Spannmittel in einer anderen Gestaltung.

### DETAILLIERTE BESCHREIBUNG DER AUSFÜHRUNGSBEISPIELE

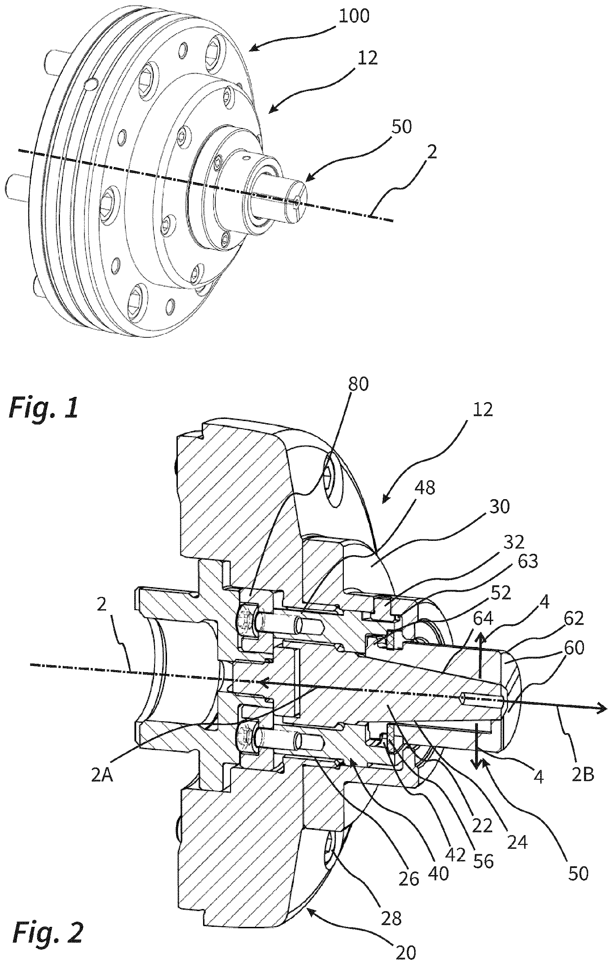

Fig. 1 und 2 zeigen ein erfindungsgemäßes Spannmittel 12 in Gesamtdarstellung bzw. im Falle der Fig. 2 in geschnittener Darstellung.

Ein Spannmittel 12 ist insbesondere dafür vorgesehen, am distalen Ende einer Rotationsspindel 100 angebracht zu werden, deren distales Ende in Fig. 1 dargestellt ist. Hierdurch lässt sich ein mittels des Spannmittels 12 eingespanntes Werkstück in rotative Bewegung versetzten, um beispielsweise spanend bearbeitet zu werden.

Das Spannmittel 12 verfügt über ein Gehäuse 20, das zu diesem Zweck an der Rotationsspindel 100 angebracht wird. In dem Gehäuse 20 sind Schraubbohrungen 28 zur Befestigung des Gehäuses 20 an der Rotationsspindel 100 vorgesehen. Am distalen und in den Figuren nach rechts weisenden Ende des Gehäuses 20 ist ein Spannkegel 22 vorgesehen, der die Mittelachse 2 des Spannmittels definiert, wobei diese Mittelachse 2 mit der Rotationsachse 2 der Rotationsspindel 100 übereinstimmt. Auf dem Spannkegel 22 ist eine Segmentspannbüchse 50 aufgezogen, die ihrerseits über drei metallische Spannsegmente 60 verfügt. Diese Spannsegmente 60 sind miteinander über Verbindungselemente 58 aus Gummi oder dergleichen verbunden.

Die Spannsegmente 60 weisen an ihrer Außenseite jeweils eine Spannfläche 62 auf. Durch die Kegelform des Spannkegels 22 und korrespondierende Gleitflächen 64 an der Innenseite der Spannsegmente 60 kann eine durch die Pfeile 4 verdeutlichte radiale Aufweitung der Segmentspannbüchse 50 erzielt werden, indem diese in Spannrichtung 2A weiter auf den Kegel aufgezogen wird.

Zum Zwecke des Aufziehens der Segmentspannbüchse 50 auf den Spannkegel 22 und somit zum Zwecke der Krafteinleitung zum Spannen von Werkstücken ist insbesondere ein Kopplungselement 40 vorgesehen. Dieses Kopplungselement 40 weist eine ringförmige Struktur auf und verfügt über Verbindungselemente 48, die durch Durchbrechungen 26 des Gehäuses 20 hindurch in einen Innenraum des Gehäuses 20 ragen und dort mit einem Steuerorgan 80 verbunden sind. Wird das Steuerorgan 80 innerhalb des Gehäuses 20 in Spannrichtung 2A oder Entspannrichtung 2B verlagert, so wird das ringförmige Kopplungselement 40 ebenfalls verlagert.

An der Segmentspannbüchse 50 und dem Kopplungselement 40 sind zusammenwirkende Abschnitte 43, 53 vorgesehen, die im Weiteren noch erläutert werden und die dafür Sorge tragen, dass eine axiale Bewegung des Kopplungselements 40 in Spannrichtung 2A auch zu einer axialen Bewegung der Segmentspannbüchse 50 führt und diese dadurch weiter auf den Spannkegel 22 aufziehen kann.

Das Kopplungselement 40 ist zusammen mit dem Steuerorgan 80 in begrenztem Maße um die Mittelachse 2 drehbar. Außenseitig am Kopplungselement ist ein Außenelement 30 vorgesehen, das mit dem Kopplungselement 40 über eine Momentenkopplung in Form eines Momentenstifts 32 und einer Momentenausnehmung 44 verbunden ist und dessen Bedeutung im Weiteren noch erläutert wird.

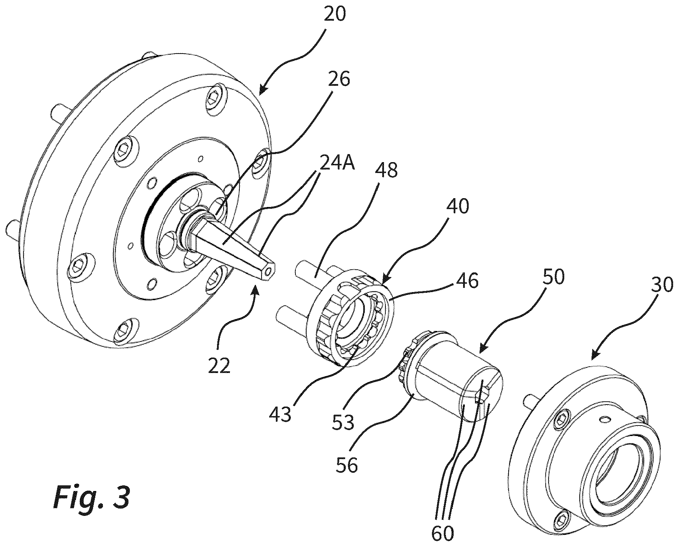

Bezugnehmend auf Fig. 3 sind hierfür die bereits genannten Durchbrechungen 26 in einer Stirnseite des Gehäuses 20 den Spannkegel 22 umgebend vorgesehen. Im Falle des vorliegenden Ausführungsbeispiels handelt es sich um insgesamt vier Durchbrechungen. Je nach erforderlicher Steifigkeit kann auch eine anderweitige Zahl von Durchbrechungen zweckmäßig sein.

Wie anhand der Fig. 3 ebenfalls zu ersehen ist, ist die Außenform des Spannkegels 22 nicht rotationssymmetrisch, sondern polygonal ausgebildet. Die Außenfläche 24 wird also hauptsächlich durch eine Anzahl von planen oder weitgehend planen Einzelflächen 24A gebildet, vorliegend von sechs Einzelflächen 24A.

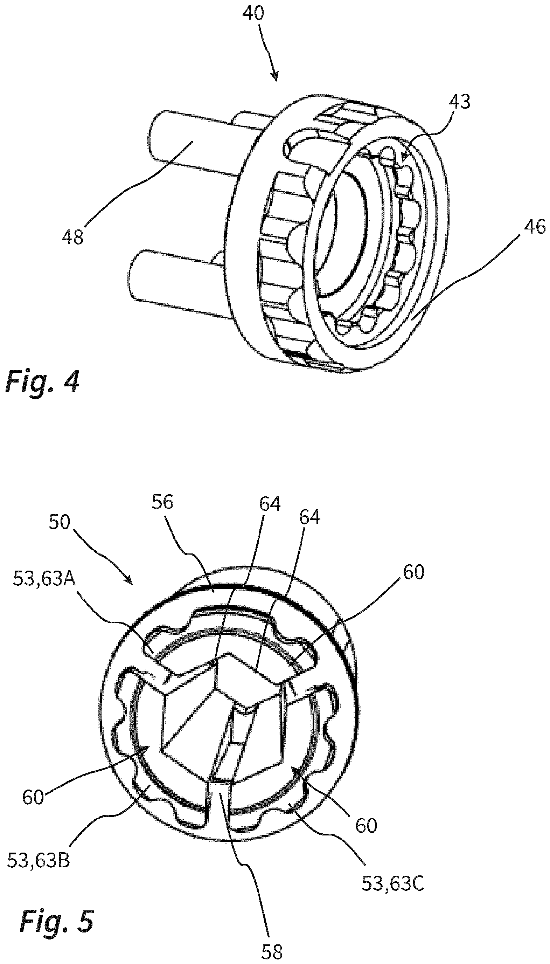

Wie anhand von Fig. 5 ersichtlich ist, in die Innenseite der Segmentspannbüchse 50 hierzu korrespondierend aufgebaut. Die Gleitflächen 64 an der Innenseite derdrei Spannsegmente 60 sind derart angeordnet, dass an jedem der Spannsegmente 60 jeweils zwei Gleitflächen 64 vorgesehen sind, die zueinander in einem Winkel von 120° stehen und die demnach entsprechend benachbarter Einzelflächen 24A ausgerichtet sind.

Die polygonale Formgebung des Spannkegels 22 und der Gesamtheit der Gleitflächen 64 führtdazu, dass ein Verdrehen der auf den Spannkegel 22 aufgeschobenen Segmentspannbüchse 50 nicht möglich ist. Vorteilhaft ist jedoch, dass die Gleitflächen 64 und die Einzelflächen 24A des Spannkegels 22 im Betrieb dauerhaft in Flächenkontakt stehen.

Die beschriebene Drehbarkeit des Kopplungselements 40 um die Mittelachse 2 dient dem Zweck, trotz der polygonalen Form des Spannkegels 22 die Anbringung der Segmentspannbüchse 50 am Kopplungselement40 und damit mittelbar am Steuerorgan 80 sowie an einem Zugorgan der Rotationsspindel 100 zu bewirken. Da die Segmentspannbüchse 50 nach Aufschieben auf den Spannkegel 22 nicht mehr drehbar ist, wird die Kopplung durch die genannte Drehbarkeit des Kopplungselements 40 hergestellt.

Zur Kopplung und zur axialen Kraftübertragung zwischen dem Kopplungselement 40 und der Segmentspannbüchse 50 sind Sicherungskonturen 53 vorgesehen. Anhand der Fig. 4 ist die Sicherungskontur auf Seite des Kopplungselements ersichtlich. Wie hier zu erkennen ist, bildet diese Sicherungskontur 53 einen nach innen weisenden Kragen mit einer Vielzahl von radial exponierten Fortsätzen, vorliegend in einer Art Wellenform.

Wie anhand der Fig. 5 ersichtlich ist, ist eine korrespondierende Wellenform auch an der Segmentspannbüchse 50 vorgesehen, nämlich dadurch, dass an den Spannsegmenten 60 drei Sicherungskonturabschnitte 63A, 63B, 63C vorgesehen sind, die nach außen weisen. Wie anhand der Fig. 5 ebenfalls ersichtlich ist, ist die Formgebung dabei nicht an allen Spannsegmenten 60 identisch. Das Spannsegmente 60 mit dem Sicherungskonturabschnitt 63A weist einen durchgehenden radial exponierten Fortsatz auf, der breiter als die anderweitigen Fortsätze ist.

Um die Segmentspannbüchse 50 montieren zu können, wird zunächst das Kopplungselement 40 mittels des Steuerorgans 80 in Entspannrichtung 2B in eine axiale Endlage gebracht. Weiterhin wird das Kopplungselement 40 in eine Freigabestellungverdreht. Dies kann insbesondere mittels des zu diesem Zeitpunkt nicht am Gehäuse 20 fixierten Außenelements 30 erfolgen, welches hierfür um die Mittelachse gedreht wird und aufgrund seiner Koppelung mit dem Kopplungselement 40 über den Momentenstift 32 und die Momentenausnehmung 44 das Kopplungselements 40 mit verdreht.

In der so erzielbaren Freigabestellung kann die Segmentspannbüchse 50 aufgeschoben werden und die Sicherungskonturen 53, 43 gestatten das Vorbeiführen aneinander durch passende Ausrichtung derjeweiligen Fortsätze.

Sobald die Segmentspannbüchse ausreichend weit auf den Spannkegel aufgeschoben ist, wird, wiederum vorzugsweise mittels des Außenelements 30, das Kopplungselement 40 um etwa 15° verdreht, so dass die Fortsätze an den Sicherungskonturen 43, 53 in Überlappung gelangen und somit jetzt eine unmittelbare axiale Trennung der Segmentspannbüchse 50 vom Spannkegel 22 nicht mehr möglich ist. Dieser Zustand wird dadurch gesichert, dass das Außenelement 30 am Gehäuse 20 festgeschraubt wird.

Das Spannmittel ist nun betriebsbereit.

Über eine axiale Verlagerung des Steuerorgans 80 und hierdurch mittelbar eine axiale Verlagerung des Kopplungselements 40 sowie der Segmentspannbüchse 50 kann diese weiter an den Spannkegel 22 aufgezogen werden, hierdurch radial aufgeweitet werden und im Ergebnis einen Spannzustand an dem außen an der Segmentspannbüchse 50 anliegenden Werkstück erzeugen.

Soll das Werkstück gewechselt werden, so wird das Steuerorgan 80 über das Zugorgan 90 in Entspannrichtung 2B verfahren, wobei das Kopplungselement 40 mitbewegt wird. Das Kopplungselement 40 gestattet es daher, dass nun auch die Segmentspannbüchse 50 gegenüber dem Spannkegel 22 in Entspannrichtung 2B verlagert wird und sich somit unter dem Eindruck der bis dahin tangential gespannten Verbindungselemente 58 radial zusammengezogen wird. Der Spannungszustand am Werkstück wird hierdurch gelöst und das Werkstück kann abgenommen und durch ein weiteres zu bearbeitendes Werkstück ersetzt werden.

Während dieses Werkzeugwechsels besteht keine Gefahr, dass sich die Segmentspannbüchse 50 vom Kopplungselement 40 löst, denn die hierfür erforderliche Drehbarkeit des Kopplungselements 40 gegenüber dem Spannkegel 22 und der Segmentspannbüchse wird durch das Außenelement 30 unterbunden.

Soll die Segmentspannbüchse 50 selbst ausgetauscht werden, so wird, wie auch beim Werkstückwechsel, das Kopplungselement 40 in Entspannrichtung 2B verfahren. Anschließend wird die Festlegung des Außenelements 30 gelöst, so dass dieses gegenüber dem Gehäuse 20 verdrehbar ist. Durch Drehung des Außenelements 30 und hiermit auch des Kopplungselements 40 wird dieses wieder in die Freigabestellung verdreht, in der anschließend die Segmentspannbüchse 50 ohne Kollision der Sicherungskonturen 53, 43 abgenommen werden kann.

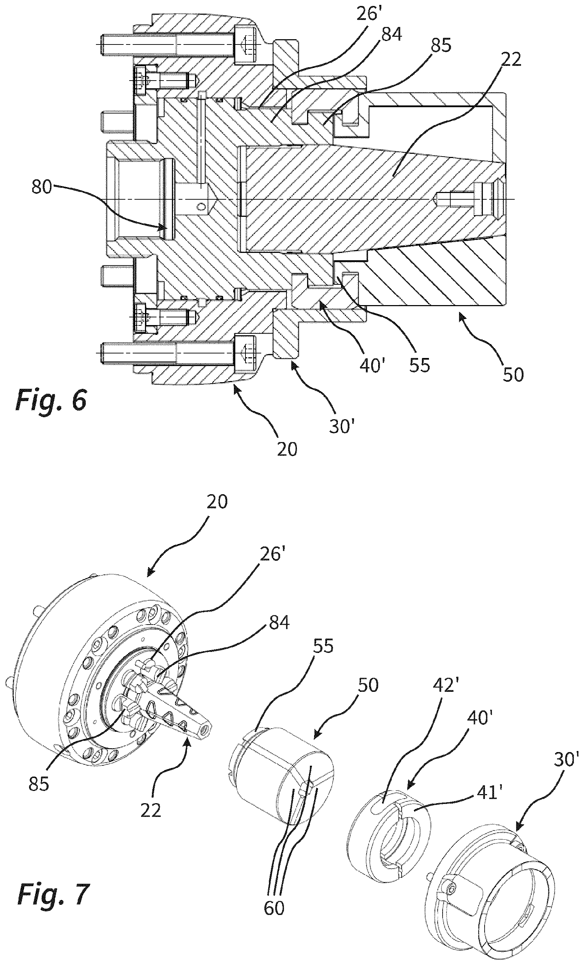

Fig. 6 und 7 zeigen eine alternative Gestaltung eines erfindungsgemäßen Spannmittels. Übereinstimmend mit dem oben beschriebenen Spannmittel 12 ist auch beim Spannmittel 12' vorgesehen, dass an einem Gehäuse 20 ein Spannkegel 22 vorgesehen, der sich zu einem distalen Ende verjüngt und eine polygonale Außenform mit sechs zueinander angewinkelten Einzelflächen 24A aufweist. Der Spannkegel 22 dient der Aufnahme der Segmentspannbüchse 50, die an der Innenseite in Übereinstimmung mit der Figur 5 schräggestellte Gleitflächen 64 aufweist.

Bei der Gestaltung der Fig. 6 und 7 ist die Kopplung der Segmentspannbüchse 50 an das Steuerorgan zum Zwecke der Axialverlagerung allerdings abweichend von der Gestaltung der Fig. 1 bis 5 gelöst. Das Steuerorgan 80 weist acht sich durch Durchbrechungen 26' im Gehäuse 20 hindurch erstreckende Zugarme 84 auf, die außenseitig des Gehäuses 20 mit nach außen weisenden Nasen 85 versehen sind.

Die Segmentspannbüchse 50 weist drei Spannsegmente 60 auf, an deren zum Gehäuse 20 hinweisenden Ende jeweils nach außen weisende Kopplungsflansche 55 vorgesehen sind.

Um die Segmentspannbüchse 50 an den Zugarmen 84 des Steuerorgangs 80 anzubringen und über das Steuerorgan 80 eine Zugkraft in die Segmentspannbüchse 50 einzukoppeln und hierdurch das Festspannen eines Werkstücks zu gestatten, ist ein mehrgliedriges Kopplungselement 40' vorgesehen. Dieses Kopplungselement 40' besteht aus zwei metallischen Halbschalen 41', die mittels eines elastischen Verbindungselements 42'verbunden sind, so dass unter elastischer Verformung des Verbindungselements 42' aufgeklappt werden können.

Dies gestattet es, nach dem Aufschieben der Segmentspannbüchse 50 auf den Spannkegel 22 das aufgeklappte Kopplungselement 40' von der Seite über die Zugarme 84 und deren Nasen 85 sowie über die Kopplungsflansche 55 zu führen und dann wieder in die Ausgangsform der Fig. 7 zu schließen.

Es stellt sich der in Fig. 6 dargestellt Zustand ein, in der das Kopplungselement 40' mittels seiner C-Profilform eine auf Zug formschlüssige Kopplung schafft. Durch eine Verlagerung des Steuerorgans 80 bezogen auf Fig. 6 nach links werden daher auch das Kopplungselement 40' und die Segmentspannbüchse 50 nach links verlagert und die Segmentspannbüchse 50 zum Zwecke des Festspannens eines Werkstücks aufgeweitet.

Um zu verhindern, dass sich das Kopplungselement 40' ungewollt öffnet und somit die formschlüssige Kopplungzwischen Steuerorgan 80 und Segmentspannbüchse 50 verloren geht, ist eine Schutzhülse 30' vorgesehen. Dies wird nach Anbringung des Kopplungselements 40' vom distalen Ende über die Segmentspannbüchse 50 und das Kopplungselement 40' geschoben und mittels einer Schraube am Gehäuse 20 befestigt.

Diese zweite Bauweise ist technische einfacher und kann daher wirtschaftlich vorteilhaft sein. Allerdings ist bei einer solchen Gestaltung der Spannkegel 22 vergleichsweise lang, so dass die Steifigkeit tendenziell geringer als bei der Gestaltung der Fig. 1 bis 5 ist. Die Gestaltung der Fig. 1 bis 5 wird daher insgesamt als vorteilhaft angesehen.

## Patentansprüche

1. Spannmittel (12, 12') in Art eines Innenspannmittels zum Festlegen von Werkstücken, insbesondere zum Zwecke der Rotationsbearbeitung dieser Werkstücke, mit den folgenden Merkmalen:
a. das Spannmittel (12, 12') verfügt über ein in Axialrichtung (2) erstrecktes Gehäuse (20), und
b. das Gehäuse (20) verfügt über einen in Axialrichtung erstreckten Spannkegel (22), der über eine umlaufende Außenfläche (24) verfügt, die sich zu einem distalen Ende hin verjüngt, und
c. das Spannmittel (12, 12') verfügt über eine Segmentspannbüchse (50) mit einer Mehrzahl von Spannsegmenten (60), die in Radialrichtung (4) gegeneinander beweglich sind, und
d. die Spannsegmente (60) weisen an ihrer Außenseite eine Spannfläche (62) zur Anlage am Werkstück auf, und
e. die Spannsegmente (60) weisen an ihrer Innenseite schräggestellte Gleitflächen (64) zur Anlage an der Außenfläche des Spannkegels auf, so dass die Spannsegmente (60) durch gemeinsame axiale Verlagerung gegenüber dem Spannkegel (22) gegeneinander radial verlagerbar sind,
mit den folgenden zusätzlichen Merkmalen:
f. die Außenfläche (24) des Spannkegels (22) weist eine im Querschnitt unrunde Form auf und die Gleitflächen (64) der Spannsegmente (60) sind korrespondierend zu dieser unrunden Form geformt, und
g. das Spannmittel (12, 12') verfügt überein gegenüber dem Gehäuse (20) bewegliches Kopplungselement (40) oder über ein abnehmbares und von außen aufsetzbares Kopplungselement (40'), wobei mittels des Kopplungselements (40, 40') ein proximales Endes der Segmentspannbüchse (50) am Spannkegel (22) gehalten ist.

2. Spannmittel (12, 12') nach Anspruch 1 mit dem folgenden zusätzlichen Merkmal:
a. der Querschnitt des Spannkegels (22) weist eine polygonale Außenform auf, insbesondere eine sechseckige Außenform,
vorzugsweise mit dem folgenden zusätzlichen Merkmal:
b. die Spannsegmente (60) derSegmentspannbüchse (50) weisen jeweils zwei zueinander angewinkelte Gleitflächen (64) auf, insbesondere zwei zueinander in einem Winkel von 120° stehende Gleitflächen (64).

3. Spannmittel (12) nach Anspruch 1 oder 2mit dem folgenden zusätzlichen Merkmal:
a. das Kopplungselement (40) ist als in sich starres Kopplungselement (40) ausgebildet.

4. Spannmittel (12) nach einem der vorstehenden Ansprüche mit dem folgenden zusätzlichen Merkmal:
a. das Kopplungselement (40) ist als um eine Mittelachse des Spannkegels (22) drehbewegliches Kopplungselement (40) gestaltet.

5. Spannmittel (12) nach Anspruch 4 mit den folgenden zusätzlichen Merkmalen:
a. das Kopplungselement (40) und die Segmentspannbüchse (50) verfügt über zueinander korrespondierende Sicherungskonturen (43, 53), und
b. die Sicherungskonturen (43, 53) sind derart aufeinander abgestimmt, dass in einer ersten Drehstellung, der Freigabestellung, die Sicherungskontur (53) der Segmentspannbüchse (50) in das Kopplungselement (40) eingeschoben werden kann und dass in einer zweiten Drehstellung, der Sicherungsstellung, die Sicherungskonturen (43, 53) derSegmentspannbüchse (50) und das Kopplungselement (40) ein Abziehen der Segmentspannbüchse (50) vom Spannkegel (22) verhindern,
vorzugsweise mit dem zusätzlichen Merkmal:
c. die Freigabestellung und die Sicherungsstellung sind gegeneinander um maximal 20° beabstandet, vorzugsweise um maximal 15°.

6. Spannmittel (12) nach Anspruch 5 mit den folgenden zusätzlichen Merkmalen:
a. die Sicherungskontur (53) der Segmentspannbüchse (50) ist in Form eines nach außen weisenden Kragens an zumindest einigen der Spannsegmente (60) ausgebildet, und
b. die Sicherungskontur (43) des Kopplungselements (40) ist in Form eines nach innen weisenden Kragens ausgebildet.

7. Spannmittel nach Anspruch 5 oder 6 mit dem folgenden zusätzlichen Merkmal:
a. die Sicherungskontur (43, 53) am Kopplungselement (40) und/oder an der Segmentspannbüchse (50) ist umlaufend uneinheitlich, so dass in der Freigabestellung die Segmentspannbüchse (50) nur in einer definierten Drehausrichtung durch das Kopplungselement (40) geschoben werden kann.

8. Spannmittel nach Anspruch 7 mit dem folgenden zusätzlichen Merkmal:
a. die Sicherungskontur (53) der Segmentspannbüchse (50) ist an den Spannsegmenten (60) vorgesehen, wobei mindestens ein Spannsegment einen Sicherungskonturabschnitt (63A) aufweist, der von Sicherungskonturabschnitten (63B, 63C) mindestens eines anderen Spannsegments (60) abweicht.

9. Spannmittel (12) nach einem der Ansprüche 4 bis 8 mit dem folgenden zusätzlichen Merkmal:
a. zum Verdrehen und/oderzurVerdrehsicherungdes Kopplungselements (40) ist ein mit diesem bezogen auf ein Verdrehen formschlüssig verbundenes Außenelement (30) vorgesehen,
vorzugsweise mit mindestens einem der folgenden zusätzlichen Merkmale:
b. das Außenelement (30) ist in Art eines das Kopplungselement (40) umgebenden Außenrings (30) ausbildet, und/oder
c. das Außenelement (30) ist zur Anbringung am Gehäuse (20) ausgebildet und weist insbesondere mindestens eine an das Gehäuse angepasste Bohrung auf.

10. Spannmittel (12) nach Anspruch 9 mit dem folgenden zusätzlichen Merkmal:
a. bezogen auf eine Axialrichtung sind das Außenelement (30) und das Kopplungselement (40) gegeneinander verschieblich,
vorzugsweise mit dem folgenden zusätzlichen Merkmal:
b. zur Herstellung des Formschlusses ist ein Momentenstift (32) oder eine Momentenausnehmung am Außenelement (30) vorgesehen, der mit einer Momentenausnehmung (44) oder einem Momentenstift des Kopplungselements (40) ineinandergreift.

11. Spannmittel (12) nach einem der vorstehenden Ansprüche mit dem folgenden zusätzlichen Merkmal:
a. das Gehäuse (20) weist mindestens eine Durchbrechung (26) auf, durch die hindurch das Kopplungselement (40) mit einem im Gehäuse (20) des Spannmittels (12) angeordneten Steuerorgan (80) verbunden ist, so dass eine Bewegung des Steuerorgans (80) gegenüber dem Gehäuse (20) zu einer Bewegung des Kopplungselements (40) gegenüber dem Gehäuse (20) führt,
vorzugsweise mit mindestens einem der folgenden zusätzlichen Merkmale:
b. das Kopplungselement (40) ist mit dem Steuerorgan (80) axial ortsfest verbunden, so dass über eine axiale Verlagerung des Steuerorgans (80) die mittels des Kopplungselements (40) angekoppelte Segmentspannbüchse (50) axial gegenüber dem Spannkegel bewegbar ist und hierdurch ein Werkstück an der Segmentspannbüchse (50) festgespannt und hiervon gelöst werden kann, und/oder
c. das Kopplungselement (40) ist mit dem Steuerorgan (80) bezogen auf die Mittelachse rotativ verbunden, so dass über eine Drehverlagerung des Steuerorgans (80) das Kopplungselement (40) gegenüber der Segmentspannbüchse (50) verdreht werden kann und somit in die Sicherungsstellung und die Freigabestellung verbracht werden kann, und/oder
d. das Gehäuse (20) weist eine Mehrzahl von Durchbrechungen (26) auf, durch die hindurch das Kopplungselement (40) mit dem im Gehäuse (20) des Spannmittels (12) angeordneten Steuerorgans (80) verbunden ist, wobei vorzugsweise mindestens drei Durchbrechungen (26) und insbesondere vorzugsweise genau sechs Durchbrechungen (26) vorgesehen sind, wobei vorzugsweise die mindestens eine Durchbrechung (26) in Form eines Langlochs ausgebildet ist, insbesondere in Form eines kreisabschnittsförmigen Langlochs.

12. Spannmittel (12) nach einem der vorstehenden Ansprüche mit dem folgenden zusätzlichen Merkmal:
a. das Spannmittel (12) verfügt über ein innerhalb des Gehäuses (20) des Spannmittels (12) angeordnetes Zugorgan (90), mittels dessen der Segmentspannbüchse (50) in proximaler Richtung auf dem Spannkegel (22) verlagerbar ist, um hierdurch eine Aufweitung der Spannfläche (62) der Segmentspannbüchse (50) zu bewirken.

13. Spannmittel (12) nach einem der vorstehenden Ansprüche 5 bis 12 mit dem folgenden zusätzlichen Merkmal:
a. die Segmentspannbüchse (50) verfügt über eine Schutzblende (56), die im montierten Zustand der Segmentspannbüchse (50) die Sicherungskonturen (43, 53) des Kopplungselements (40) und/oder der Segmentspannbüchse (50) schützt,
insbesondere mit mindestens einem der folgenden zusätzlichen Merkmale:
b. die Schutzblende (56) ist als ringförmige Schutzblende (56) und vorzugsweise aus einem gummiähnlichen Material hergestellt, wobei die Schutzblende (56) vorzugsweise einstückig mit zwischen den Spannsegmenten (60) vorgesehenen Verbindungselementen (58) ausgestaltet ist, und/oder
c. das Kopplungselement (40) verfügt über eine stirnseitige Anlagefläche (46) und im montierten Zustand der Segmentspannbüchse (50) liegt die Schutzblende (56) umlaufend an der Anlagefläche (46) an.

14. Spannmittel (12') nach Anspruch 1 oder 2 mit dem folgenden zusätzlichen Merkmal:
a. das Kopplungselement (40') ist als in sich verformbares Kopplungselement (40') ausgebildet,
insbesondere mit dem zusätzlichen Merkmal:
b. das Kopplungselement (40') weist mindestens zwei starren und vorzugsweise metallischen Teilelemente (41') auf, die aneinander beweglich angebracht sind, insbesondere mittels eines elastisch verformbaren Verbindungselements (42'), wobei die beiden Teilelemente (41') gemeinsam einen an einer Stelle unterbrochenen Kopplungsring (40) bilden, und/oder
c. das Kopplungselement (40') ist zumindest abschnittsweise mit einem C-förmigen Profilquerschnitt ausgebildet zur formschlüssigen Kopplung eines Steuerorgans (80) mit der Segmentspannbüchse (50).

15. Spannmittel (12) nach einem der vorstehenden Ansprüche mit mindestens einem der folgenden weiteren Merkmale:
a. das Spannmittel (12) ist zur Anbringung an einer Rotationsspindel (100) ausgebildet und verfügt über Schraubbohrungen (28) im Gehäuse, durch die Befestigungsschrauben in einer Stirnseite der Rotationsspindel geschraubt werden können, und
b. es ist ein in sich starres und vorzugsweise einstückiges Gehäuse (20) vorgesehen, welches sowohl die Schraubbohrungen (28) als auch den Spannkegel (22) umfasst.
